# EUROPEAN PATENT SPECIFICATION

(11) **EP 3 815 198 B1**
(45) Date of publication and mention of the grant of the patent: **14.01.2026**
(21) Application number: 19804422.4
(22) Date of filing: 17.05.2019
(51) Int. Cl.: H02G 3/14, H01R 13/717, H01R 25/00

(54) **ELECTRICAL OUTLET COVER WITH INTEGRATED LIGHTING**
STECKDOSENABDECKUNG MIT INTEGRIERTER BELEUCHTUNG
COUVERCLE DE SORTIE ÉLECTRIQUE À ÉCLAIRAGE INTÉGRÉ

(30) Priority: 18.05.2018 US 201815984005; 11.04.2019 US 201916381822
(43) Date of publication of application: 05.05.2021
(73) Proprietor: O'Reilly Winship, LLC, Dallas TX 75251 (US)
(72) Inventor: O'REILLY, Michael, Dallas, TX 75251 (US); WINSHIP, Donnye, Dallas, TX 75251 (US)
(74) Representative: Barker Brettell LLP
(86) International application number: PCT/US2019/032940
(87) International publication number: WO 2019/222672

(56) References cited:
- WO-A1-2015/078079
- DE-A1- 10 149 860
- DE-A1- 102014 001 371
- DE-U1- 202014 001 980
- US-A1- 2003 092 297
- US-A1- 2003 092 297
- US-A1- 2006 073 731
- US-A1- 2012 068 612
- US-A1- 2017 222 364

## Description

### CROSS-REFERENCE TO RELATED APPLICATIONS

This application is a continuation-in-part of U.S. Patent Application No. 15/984,005, filed May 18, 2018, which claims the benefit of U.S. Provisional Application No. 62/561,308, filed September 21, 2017.

### TECHNICAL FIELD

The present disclosure relates to light emitting devices. More particularly, and not by way of limitation, the present disclosure is directed to an apparatus, and system for an electrical outlet cover with integrated lighting.

### BACKGROUND

Nightlights, and emergency lighting devices have been around for many years, but each have their own individual downfalls. Nightlights in particular often require at least one electrical outlet or socket to be used, while in some cases both outlets are also used by the nightlight. These lights also can become very hot, and if other items in a room such as a child's blanket or stuffed animal comes in contact with the nightlight for an extended period then a fire hazard, or even an actual fire can result. For emergency lighting, there is typically no manner of operation that allows the light to be utilized in anything other than a power outage. Additionally, these lights typically use at least one if not both outlets of a traditional electrical plug outlet or socket.

One of the additional downfalls of these devices is there is no manner or means for dual operation for a nightlight and emergency lighting. In many cases, a nightlight cannot operate as an emergency light due to a requirement that they be plugged into an outlet or socket that cannot provide power during a power outage. Many nightlights also do not include light detectors or photovoltaic cell to determine when daylight or other light sources are sufficient to turn off and/or allow the nightlight to cool. Conversely, emergency lights are not conducive to use as nightlights because emergency lights require large batteries or other energy sources that can be utilized in the event of a power failure to produce a strong or high intensity light, along with circuitry to detect when a power failure occurs. These emergency lights are also often connected together to the battery backup system for an entire building, but cannot provide lighting to pathways or in rooms that are not connected to the battery backup system.

It would be advantageous to have an apparatus, and system for an electrical outlet cover with integrated lighting that overcomes the disadvantages of the prior art. The present disclosure provides such an apparatus and system.
US2003/092297 A1 describes a convenience light which includes a housing, a first light source to emit light when the apparatus is coupled to a conventional electrical outlet, and a supplemental electrical outlet having at least the same amount of electrical receptacles as the conventional electrical outlet to which the apparatus is coupled. The first light source selectively emits light and the apparatus also includes a control device to control when the light source emits light. The supplemental electrical outlet selectively provides access to electrical power associated with the conventional electrical outlet and the apparatus also includes a control device to control when the supplemental electrical outlet provides access to the electrical power.
WO2015/078079 A1 describes a power socket cover with emergency light, comprising a cover body provided with socket holes, the cover body comprising a lower cover and an upper cover connected to the lower cover, the lower cover being provided with a circuit board, a rechargeable battery and emergency lights, the circuit board being provided with an external power line for connecting to an external power supply, the rechargeable battery and the emergency lights being in electric connection with the circuit board respectively; when the power line is connected to the external power supply, the emergency lights are in off state; when the power line is disconnected from the external power supply, the emergency lights are in lighted state.
US2012/068612 A1 describes a cover for an electrical receptacle including a faceplate. The cover also includes a first transmission tab configured to be electrically connected to a first power line of the electrical receptacle and a second transmission tab configured to be electrically connected to a second power line of the electrical receptacle. Additionally, the cover includes a device (such as a light source, circuit, port, or sensor) in communication with the first transmission tab and the second transmission tab.

### BRIEF SUMMARY

According to a first aspect of the invention, there is provided an outlet cover, as defined in claim 1. Optional and/or preferable features are defined in dependent claims 2 to 9.

### BRIEF DESCRIPTION OF THE DRAWINGS

The novel features believed characteristic of the disclosure are set forth in the appended claims. The disclosure itself, however, as well as a preferred mode of use, further objectives and advantages thereof, will be best understood by reference to the following detailed description of illustrative embodiments when read in conjunction with the accompanying drawings, wherein:
FIG. 1A is an illustration of an outlet cover in a front perspective view, not covered by the appended claims, but is considered as useful for understanding the invention.
FIG. IB is an illustration of an outlet cover in a rear perspective view, not covered by the appended claims, but is considered as useful for understanding the invention.
FIG. 2 is an illustration of an outlet cover in a rear exploded view, not covered by the appended claims, but is considered as useful for understanding the invention.
FIG. 3 is an illustration of an outlet cover in a front view, which is not covered by the appended claims, but is considered as useful for understanding the invention.
FIG. 4 is an illustration of an outlet cover in a side view, which is not covered by the appended claims, but is considered as useful for understanding the invention.
FIG. 5 is an illustration of a light source, which is not covered by the appended claims, but is considered as useful for understanding the invention.
FIG. 6A is an illustration of an alternative outlet cover in rear perspective view, which is not covered by the appended claims, but is considered as useful for understanding the invention.
FIG. 6B is an illustration of an alternative outlet cover in rear perspective view, which is not covered by the appended claims, but is considered as useful for understanding the invention.
FIG. 7 is an illustration block diagram view of a light emitting device, which is not covered by the appended claims, but is considered as useful for understanding the invention.
FIG. 8A is an illustration of a schematic for a portion of a light emitting device, which is not covered by the appended claims, but is considered as useful for understanding the invention.
FIG. 8B is an illustration of a schematic for a portion of a light emitting device, which is not covered by the appended claims, but is considered as useful for understanding the invention.
**FIG. 9A** is an illustration of a front perspective view of an outlet cover with a directional indicator, which is not covered by the appended claims, but is considered as useful for understanding the invention.
**FIG. 9B** is an illustration of a rear perspective view of an outlet cover with a directional indicator, which is not covered by the appended claims, but is considered as useful for understanding the invention.
**FIG. 10** is an illustration of a front view of an outlet cover with directional indicators, which is not covered by the appended claims, but is considered as useful for understanding the invention.
**FIG. 11** is an illustration of a block diagram view of an outlet cover system according to the invention.
**FIG. 12** is an illustration of a front view of an outlet cover with directional indicators according to the invention.
**FIG. 13A** is an illustration of a light source for an outlet cover, which is not covered by the appended claims, but is considered as useful for understanding the invention.
**FIG. 13B** is an illustration of a light source with extensions for an outlet cover, which is not covered by the appended claims, but is considered as useful for understanding the invention.

### DETAILED DESCRIPTION

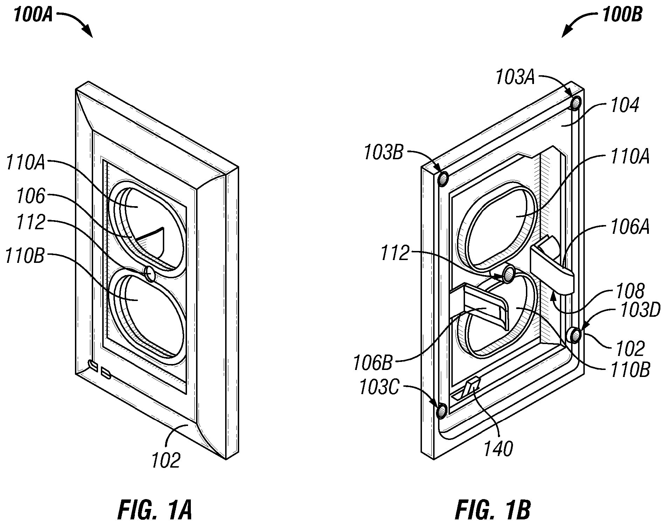

An embodiment of the disclosure will now be described. **FIG. 1A** is an illustration of an outlet cover **100A** in a front perspective view, not covered by the appended claims, but is considered as useful for understanding the invention. The outlet cover **100A** may have a faceplate **102.** The faceplate 102 can also have an outlet opening or set of outlet openings **110A** and/or **110B.** The faceplate 102, in one embodiment of the present disclosure would be a faceplate for an electrical outlet, but it would be understood that other faceplates and/or covers could also be replaced with the outlet cover **100A.** The other faceplates and/or openings, could include, but are not limited to, electrical outlets, light switches, alarm boxes, thermostats, and/or objects or devices connected to electrical power.

The faceplate **102** and/or backplate (not illustrated) may also have an arm 106 extending from, affixed to, or attached to the outlet cover **100A.** The arm **106** can also have an electrical conductor that may attach to a power source, or electrical energy to power a nightlight and/or emergency light circuit. The outlet cover **100A** can be connected to an electrical outlet or switch through a fastener opening **112.** The fastener opening, may allow for any number of fasteners, such as, but not limited to, screws, nails, clips, adhesives, glues, synthetic materials, dovetail, tongue and groove, post and hole, snaps or a snap like connection, or any other attachment means or method, or any combination thereof.

**FIG. 1B** is an illustration of an outlet cover **100B** in a rear perspective view, not covered by the appended claims, but is considered as useful for understanding the invention. The outlet cover **100B** may have a faceplate **102,** and can also have a backplate **104,** that in one embodiment of the present disclosure may be removably coupled. The backplate **104** may be removably coupled to the faceplate **102** through a set of fasteners **103A, 103B, 103C,** and/or **103D** (collectively **103**). It would be understood that the faceplate **102,** and the backplate **104** may also be removably coupled through other fasteners such as screws, nails, clips, adhesives, glues, synthetic materials, dovetail, tongue and groove, post and hole, snaps or a snap like connection, or any other attachment means or method, or any combination thereof.

The backplate **104** may also a first arm **106A** and/or a second arm **106B** (collectively an arm **106,** or an at least one arm). The arm **106** can extend from, be attached and/or affixed to the backplate **104** via a fastener(s). The arm **106** may also have an electrical conductor **108** (or at least one electrical conductor) attached, affixed, or housed within the arm **106.** The electrical conductor **108,** may include, but is not limited to having a bump, square, spring, block, tab, or other electrical conducting material and/or shape. The electrical conductor **108** can attach or connect to a power source, or electrical signal. In one embodiment of the present disclosure, the power source, or electrical signal may be an Alternating Current ("AC") voltage.

The power source and/or electrical signal may result from replacing a traditional outlet or switch cover or faceplate with the outlet cover **100B.** The outlet and/or switch can be placed through the outlet openings **110A** and/or **110B.** It would be understood that different configurations of the outlet opening(s) could also be utilized such as, but not limited to, a single plug or switch configuration, a double plug or switch configuration, a triple plug or switch configuration, a quad plug or switch configuration, and/or as may plugs or switches as may be used in a particular configuration. The outlet cover **100B** can be attached to an outlet or switch through a fastener opening **112,** and additional openings may be utilized if a different plug and/or switch configuration is utilized.

In one embodiment of the present disclosure, a switch **140** may be utilized to switch or shift between multiple operating modes of the outlet cover **100B.** The switching or shifting between multiple operating modes may be an instantaneous or approximately instantaneous switching or shifting. The switch **140** may be attached, affixed, and/or housed within the faceplate **102** and/or the backplate **104.** The operating modes can include, but are not limited to, a nightlight mode and/or an emergency lighting mode.

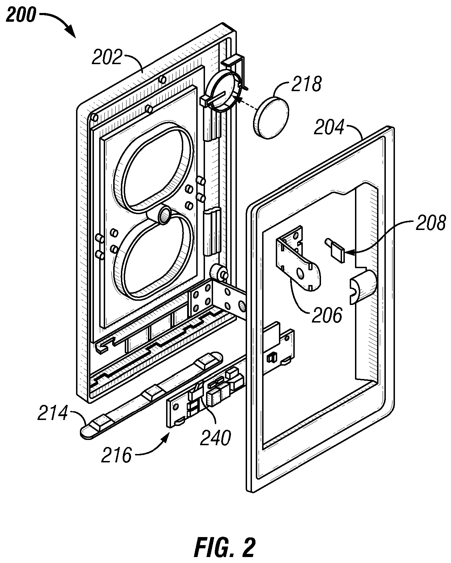

**FIG. 2** is an illustration of an outlet cover **200** in a rear exploded view, not covered by the appended claims, but is considered as useful for understanding the invention. The outlet cover **200** may be comprised of a faceplate **202,** and/or a backplate **204.** The faceplate **202,** and/or backplate **204** may also connect, affix, attach, and/or comprise an arm **206.** The arm **206** may have an electrical conductor **208** connected, affixed, attached, and/or housed within it. The arm **206,** and/or the electrical conductor **208** may also have wires or other electrically conductive materials affixed, attached, and/or housed within them

The outlet cover **200** may also have a light source **214** for producing, generating, and/or emitting light. A control circuit **216** can control when and/or if the light source **214** is active. The control circuit **216** may also be connected to a battery **218.** The battery **218** can allow for the storing of energy from an incoming voltage source. The light source **214,** the control circuit **216,** and/or the battery **218** can be connected, attached, affixed, and/or housed within the outlet cover 200. For example, in one embodiment of the present disclosure the light source **214,** the control circuit **216,** and/or the battery **218** may be removably connected, attached, affixed, and/or housed within the faceplate 202. Alternatively, the light source **214,** the control circuit **216,** and/or the battery **218** may be removably connected, attached, affixed, and/or housed within the backplate **204.**

The battery **218** may be connected to the power source, and/or electrical signal through the control circuit **216.** Alternatively, the battery may also be connected directly or indirectly to the electrical conductor **208** through wires or other electrically conductive materials. The battery **218** may also provide energy and/or power to the light source **214.** In one embodiment of the present disclosure, the light source **214** may be directly or indirectly connected to the power source, and/or electrical signal. The light source **214** may be housed or enclosed within the faceplate **202,** and/or backplate **204** such that an opening may be created that is defined by the faceplate **202** and/or the backplate **204.** The control circuit **216** may also have a switch **240** that may control if the outlet cover 200 can operate in a nightlight or emergency light mode of operation, or some other mode of operation as well.

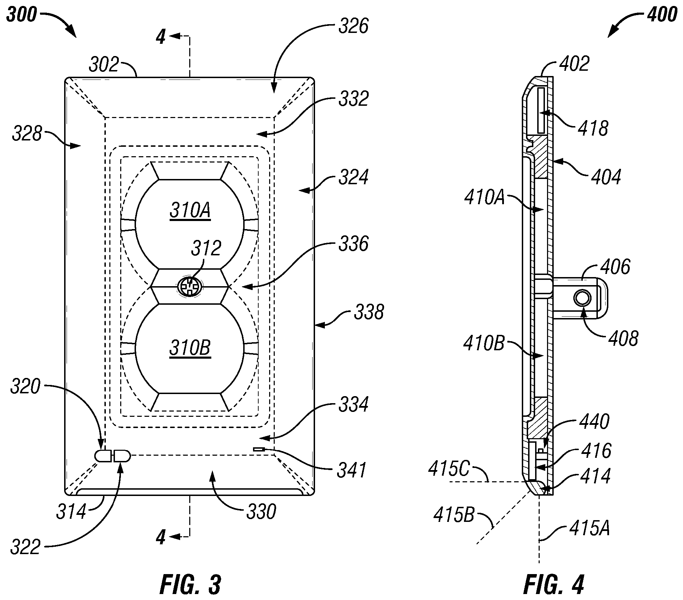

FIG. 3 is an illustration of an outlet cover 300 in a front view, which is not covered by the appended claims, but is considered as useful for understanding the invention. The outlet cover 300, may have a faceplate 302, which may also be described as a cover, a switch or outlet faceplate, or a switch or outlet cover. The faceplate 302 may have, or define at least one outlet opening 310A and/or 310B (collectively 310). While depicted as an oblong oval or rectangle, it would be understood that any shape could be utilized for the opening(s) and/or to define an opening or aperture such as, but not limited to, a square, sphere, cylinders, polygons, ellipses, crescents, cubes, cuboids, ellipsoids, cones, prisms, pyramids, or combinations thereof.

The faceplate 302 may also have or define a fastener opening 312 that may be utilized to place a fastener, such as, but not limited to a screw, a bolt, a nail, adhesives, glues, synthetic fasteners, metallic fasteners, wood fasteners, alloy fasteners, wood fasteners, other forms or types of fasteners, and/or any combination thereof. The faceplate 302 can also have a light source 314, which in one embodiment may include a light bar, and/or a combination of light bulbs or light emitting diodes such as, but not limited to, LEDs, and/or OLEDs (or at least one LED or OLED). An indicator 320, and/or a sensor 322 may also be housed within the faceplate 302 and/or backplate (not illustrated), or have an aperture, housing, and/or void defined by the faceplate 302 and/or backplate (not illustrated). The indicator 320 can be utilized, but not limited to, informing a user when a power source is providing power and/or energy to the outlet cover 300, when the battery is active, and/or which mode the outlet cover is operating in. The indicator 320 may also be placed in aperture defined by the faceplate 302, and/or backplate 304, or affixed to the faceplate **302** directly or through a lens. The sensor **322** (or at least one sensor) may include but is not limited to, a light sensor, photo resistor, photodiode, and/or phototransistor, for detecting and/or measuring the amount of ambient light, or other environmental conditions in a local environment. The sensor **322** may also be placed in aperture defined by the faceplate **302,** and/or backplate **304,** or affixed to the faceplate **302** directly or through a lens to allow it to respond to environmental conditions. In one embodiment, the sensor **322** may also include at least one sensor or other environmental sensors such as, but not limited to, humidity, temperature, air quality, carbon dioxide, carbon monoxide, nitrogen dioxide, vibration, accelerometer, microphones, sound detection, gas sensors, pressure sensors, tilt sensors, weather, and/or other sensors that may include or provide a signal or indication of an environmental event.

A sound emitter **341** may also be housed within the faceplate **302** and/or backplate (not illustrated), or have an aperture, housing, and/or void defined by the faceplate **302** and/or backplate (not illustrated). The sound emitter **341** can be coupled to the control circuit (not illustrated) and allow for a sound to be emitted continuously or intermittently from the outlet cover **300** for a specified amount of time, such as but not limited to, 10 seconds, 15 seconds, 30 seconds, 1 minute, 3 minutes, 5 minutes, 10 minutes, 15 minutes, and/or 30 minutes after a power failure has occurred and the power has not been restored.

In one embodiment of the present disclosure, the outlet cover **300** may have a front surface **338** that may comprise a first angled section **324,** a top angled section **326,** a second angled section **328,** a bottom angled section **330,** a top flat section **332,** a bottom flat section **334,** or a middle flat section **336.** The angled sections **324, 326, 328,** and/or **330** may in one embodiment of the present disclosure, provide an outer boundary of the faceplate **302.** Wherein the flat sections **332, 334,** and/or **336** can provide an area for the outlet opening(s) **310.** It would be understood, that in alternative embodiments the angled sections may also be rounded, flat, and/or squared, or any other decorative profile and/or shape, while the flat surfaces may in alternative embodiments can be angled, rounded, textured, or any other decorative profile and/or shape.

**FIG. 4** is an illustration of an outlet cover **400** in a side view, which is not covered by the appended claims, but is considered as useful for understanding the invention. The outlet cover **400,** may have a faceplate **402,** and/or a backplate **404.** The faceplate **402,** and the backplate **404** may be connected or coupled together through fasteners (not shown). The faceplate **402,** and/or the backplate **404** may also define or provide for an outlet opening(s) **410A/410B.** An arm **406** can be connected, affixed, and/or coupled to the faceplate **402,** or the backplate **404.** In alternative embodiments of the present disclosure, the arm **406** may be made, manufactured, or formed with the faceplate **402,** or the backplate **404.**

An electrical conductor **408** may be housed within, affixed, connected, or coupled with the arm **406.** The electrical conductor **408** can be a rounded button, or bump that can have any number of shapes or profiles that would allow it to touch, couple, and/or connect to a power source. The electrical conductor **408** may also have wires or other conductors coupled to it, in order to couple or connect it to a control circuit **416,** and/or a battery **418.** The control circuit **416** can control the operational mode (or at least one operational mode) of the outlet cover **400,** and/or the light source **414.** The light source **414** may generate or emitting light in any number of directions, in one embodiment the light source may generate light in a downward or 0 degree position **415A.** While in other embodiments, the light might be generated in a horizontal or 90 degree position **415C,** or any number of angles or position 415B in between such as, but not limited to 30 or 45 degree positions. The positions are referred to and/or relative to a downward position, with the angle be extended in a rotational arc upward and forward (front side) of the outlet cover 400. For example, if the outlet cover is placed in an electrical outlet, with the light source on the bottom side of the outlet cover (i.e., the light source is facing the floor) then the light in these various positions could light the baseboards in the downward position, to the opposite side of a hallway or room in the horizontal position. The at least two operational modes are an emergency lighting mode which activates the at least one directional indicator and a combination nightlight and emergency lighting mode. A switch 440 causes the nightlight mode portion of the control circuit including the light source to be activated or deactivated.

In one embodiment of the present disclosure, the outlet cover 400 may be in the nightlight operational mode, allowing a light source 414 to generate light based on a sensor indicating when the room or location is no longer sufficiently lighted. The nightlight mode may also include the emergency lighting mode in alternative embodiments or may be used exclusively without the emergency lighting mode. The emergency lighting mode may be activated when there is no power or energy provided to the control circuit 416 by the electrical conductor(s) 408. The operational modes may be used exclusively or in combination.

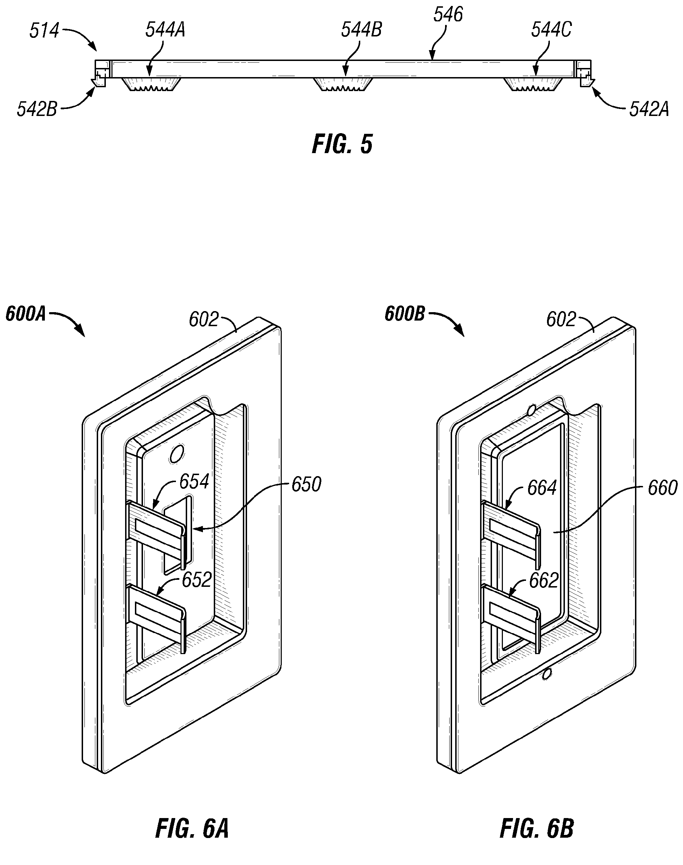

FIG. 5 is an illustration of a light source 514, which is not covered by the appended claims, but is considered as useful for understanding the invention. The light source may be connected, coupled, and/or affixed to an outlet cover (not shown). In one embodiment of the present disclosure, the light source 514 may be clipped via clip 542A and/or clip 542B within the light emitting device. The light source 514 can also have at least one light bulb, wherein the light bulb is illustrated as light bulb 544 A, light bulb 544B, and/or light bulb **544C** (collectively light bulbs **544**). It would be understood that these light bulbs may include any number of light emitting sources, including, but not limited to LEDs, OLEDs, and other types or forms of bulbs, or any combinations thereof. For example, the at least one light bulb, may be an at least one LED. These light bulbs may also be set at various angles to produce varying degrees, and/or distributions of light. In an alternative embodiment of the present disclosure, each of the light bulbs may be set at a different angle, e.g., light bulb **544A** may be set at a downward or 0 degree position, while light bulb **544B** is set at a 30 degree position, and/or light bulb **544C** is set at a 45 degree position. **In** another alternative embodiment, the light bulbs may each have varying degrees of light distribution based on their construction or manufacturer. For example, light bulbs **544A** and/or **544C** may have a 15 degree light distribution angle, while light bulb **544B** has a light distribution angle of 30 degrees allowing for a broader or more expansive light distribution. In another embodiment, a lens **546** may also be utilized to control, and/or vary the light distribution of light bulbs **544,** while it would be understood that the lens **546** may also be split, sectioned, and/or have portions that may vary the light distribution of each individual light bulb.

**FIG. 6A** is an illustration of an alternative outlet cover **600A** in rear perspective view, which is not covered by the appended claims, but is considered as useful for understanding the invention. The outlet cover **600A** may have a faceplate **602,** and/or a backplate **604.** The faceplate **602,** and backplate **604** may be attached, connected, and/or coupled together via a fastener. The faceplate **602,** and/or backplate **604** may allow for, provide, and/or define a switch opening **650** to allow for a light switch, such as, but not limited to a flip or toggle switch, or a single pole, or double pole switch.

The faceplate **602,** and/or backplate **604,** may have a first arm **652** or a second arm **654** attached, coupled, connected, and/or affixed to them. In one embodiment of the present disclosure, the first arm **652** may touch and/or couple with one electrical conductor or power source nodes via an electrical conductor (not shown). Similarly, the second arm **654** may touch and/or couple with one electrical conductor or power source nodes via an electrical conductor (not shown).

**FIG. 6B** is an illustration of an alternative outlet cover **600B** in rear perspective view, which is not covered by the appended claims, but is considered as useful for understanding the invention. The outlet cover **600B** may have a faceplate **602,** and/or a backplate **604.** The faceplate **602,** and backplate **604** may be attached, connected, and/or coupled together via a fastener. The faceplate **602,** and/or backplate **604** may allow for, provide, and/or define a switch or outlet opening **660** to allow for a light switch, such as, but not limited to a rocker switch, a switch and/or sensor, a flip or toggle switch, or a single pole, or double pole switch.

The faceplate **602,** and/or backplate **604,** may have a first arm **662** or a second arm **664** attached, coupled, connected, and/or affixed to them. In one embodiment of the present disclosure, the first arm **662** may touch and/or couple with one electrical conductor or power source nodes via an electrical conductor (not shown). Similarly, the second arm **664** may touch and/or couple with one electrical conductor or power source nodes via an electrical conductor (not shown).

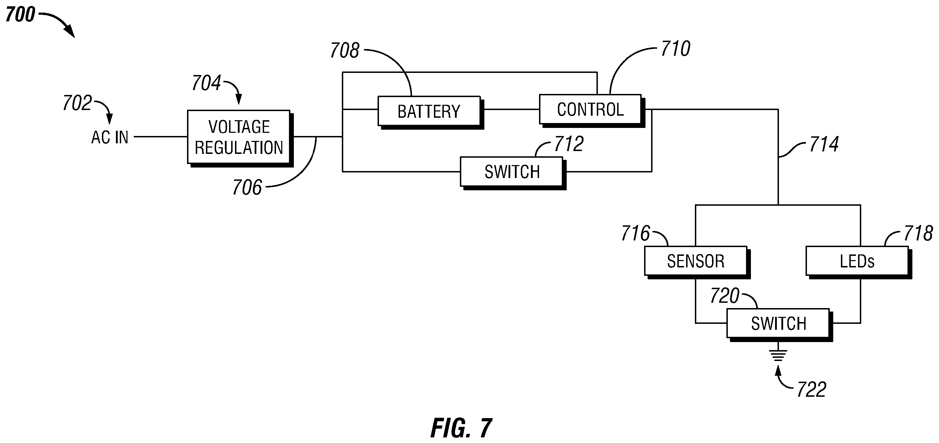

**FIG. 7** is an illustration block diagram view of an outlet cover system 700, which is not covered by the appended claims, but is considered as useful for understanding the invention. The outlet cover system **700** may have an incoming voltage source **702** that can in one embodiment of the present disclosure be an Alternating Current or AC voltage source. In one embodiment of the present disclosure, the incoming voltage source **702** may be received by an at least one conductor (not shown). The incoming voltage source **702,** may be regulated and/or converted to a DC operating voltage by a voltage regulation circuit **704** to regulate the incoming voltage from the incoming voltage source **702.** The output of the voltage regulation circuit **704** can be a regulated voltage **706,** the regulated voltage can be, but is not limited to, sent to a battery **708,** a control circuit **710,** and/or a switch **712.** The battery **708,** can in alternative embodiments of the present disclosure be coupled and/or connected to a battery charging circuit that may utilize the regulated voltage **706.** The control circuit **710** can allow the outlet cover system **700** to provide a light source during a power outage by activating the battery, and/or opening a connection or coupling between the light source and the battery **708.** The control circuit **710** may in one embodiment of the present disclosure also include the switch **712.**

The switch **712** allows the battery and/or control circuit **710** to be bypassed and the regulated voltage to be passed to the input voltage node **714.** The switch **712** may allow for the controlling a connection between the light source **718,** the battery **708,** and the regulated voltage **706.** The input voltage node **714** may provide a voltage to a sensor **716,** and/or a light source **718.** The sensor **716,** can be connected to a switch **720** that may be connected to the light source **718,** with all of these being coupled to a ground **722.** The sensor **716,** may include, but is not limited to, a light sensor, a photo resistor, a photodiode, and/or a phototransistor.

It would be understood, that a ground **722** can be placed within the circuit at any number of points and could also be illustrated by more than one ground. The switch **712** may prevent a current from passing through the light source **718** when a sufficient level of light is detected within the room or environment that the outlet cover system is placed in. For example, when utilized in a nightlight operational mode, the sensor **716** may prevent the light source from operating if an additional light, and a sufficient amount of sunlight has entered the room. Alternatively, in an emergency lighting operational mode the sensor **716** may be utilized to conserve the battery **708,** and allow for the light source to be utilized for the maximum number of days, hours, and/or minutes. In alternative embodiments of the present disclosure, the battery and/or control circuit may be considered an emergency lighting circuit, while the switch **712,** and/or the sensor **716** may be considered a nightlight circuit.

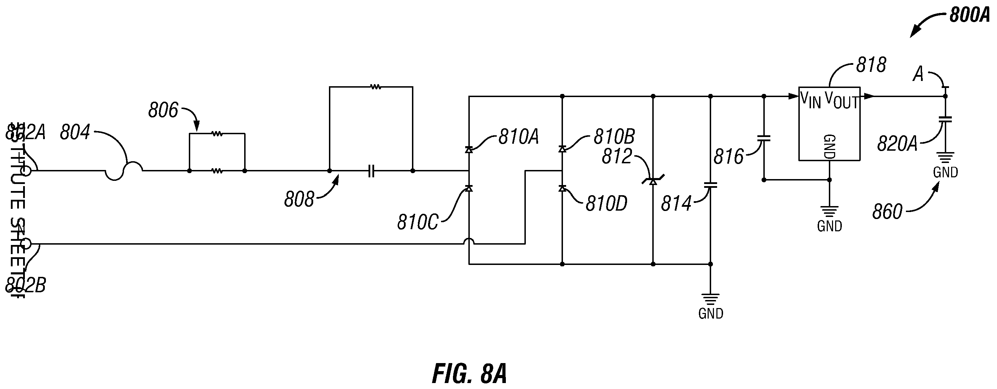

**FIG. 8A** is an illustration of a schematic for a portion of an outlet cover system 800A, which is not covered by the appended claims, but is considered as useful for understanding the invention. The outlet cover system may have a high power source input **802A,** and a low power source input **802B,** it would understood that in alternative embodiments the low power source input **802B** may also be considered a ground **860.** However, in alternative embodiments it may be the neutral, or a second "hot" line of an AC voltage. The high power source input **802A** may be coupled to a fuse **804.** The fuse **804** would be of a sufficient size to prevent an overcurrent, and/or an overvoltage from occurring within the circuit.

Coupled to the fuse **804** may be a resistance **806,** the resistance may have at least one resistor, or may have a combination of resistors in series and/or parallel to create a specific desired resistance value. The resistance **806** may be coupled with a resistance, and/or capacitor or and RC block **808.** It would be understood that the R in RC would stand for resistance or a resistor, and the C would stand for capacitance or a capacitor. The resistance and capacitance while illustrated in a parallel configuration, could be in a series, and a combination of series and parallel to create the desired resistance and capacitance combination.

The RC block **808** may be coupled between diode **810A** and/or diode **810C,** while the low power source input **802B** may be coupled between diodes **810B** and/or diode **810D.** It would be understood that diodes **810A, 810B**, **810C,** and/or **810D** collectively would be a bridge rectifier **810.** The bridge rectifier **810** may be utilized to convert an AC voltage to a DC voltage. The output of the bridge rectifier **810** may include a diode **812,** which can in one embodiment of the present disclosure be a Zener diode, and/or a capacitor **814** that may be in a series and/or parallel configuration, or a combination thereof. A voltage regulator **818** may be utilized to maintain a specific voltage, and/or condition the DC voltage from the bridge rectifier. A capacitor **816** can be utilized to smooth or remove transients from the input of the voltage regulator **818,** by coupling the input of the voltage regulator **818** to ground via the capacitor **816.** Similarly, a capacitor **820A** can be utilized to smooth or remove transients from the output of the voltage regulator **818,** by coupling the output of the voltage regulator **818** to ground via the capacitor **820A.** The node A may be used as a reference to connections or nodes throughout the circuit that may have the same voltage or current as node A.

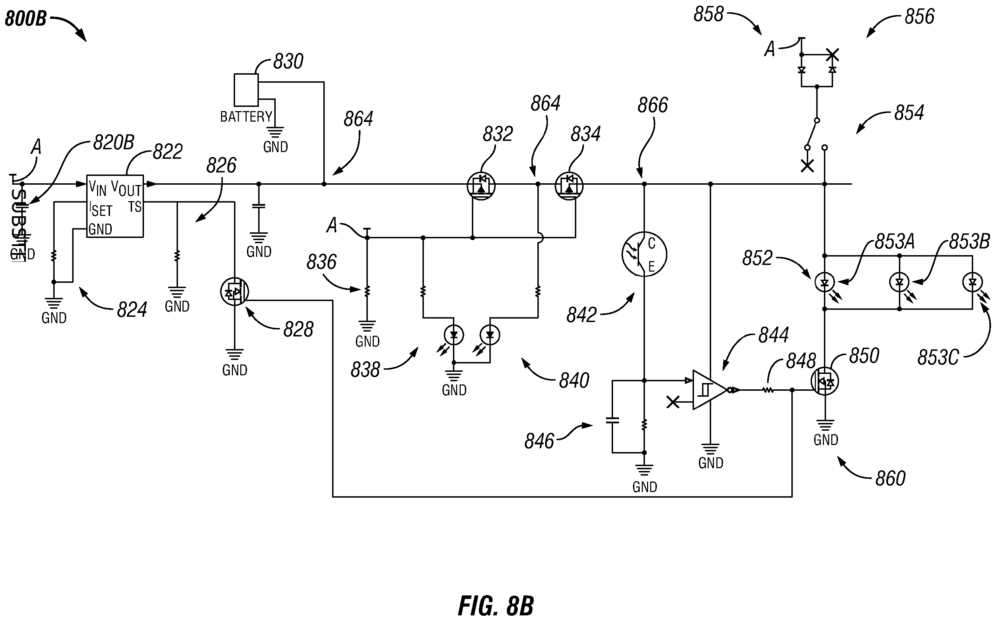

**FIG. 8B** is an illustration of a schematic for a portion of an outlet cover system 800B, which is not covered by the appended claims, but is considered as useful for understanding the invention. The portion of the outlet cover system **800B** illustrated in **FIG. 8B** is connected and/or coupled to the portion of the outlet cover system **800A** illustrated in **FIG. 8A** by node A. It would be understood, that these portions may be one circuit, and/or multiple circuits coupled together.

Node A is coupled to a battery charger **822** that may receive the regulated voltage at its voltage input terminal. The output voltage of the battery charger **822** may run to a battery **830,** or an at least one battery, as more than one battery may be utilized in alternative embodiments of the present disclosure. The battery charger **822** may have additional inputs and/or outputs. These inputs and outputs may be connected or coupled to ground via resistance **824,** resistance **826,** and/or capacitors **820B.** The output of the battery charger **822,** while connected or coupled to the battery **830,** the output may also be coupled or connected to a transistor **832.** A second transistor **834** may also be coupled directly or indirectly to the output of the battery charger **822.**

The transistor **832** may be coupled to the output of the battery charger **822,** Node A, and/or transistor **834.** The transistor **832** is configured to prevent additional voltage and/or current from being connected or coupled to the battery **830** at node **868,** while it may also allow for the battery **830** to be connected or coupled to a light source. The transistor **834** allows for a current and/or voltage to sense or seen at the sensing node **864** that can be between the transistors **832/834.** A first diode **838** may be coupled to node A, while a second diode **840** may be coupled to the sensing node **864.** The first diode **838** and the second diode **840** may in one embodiment of the present disclosure be a Light Emitting Diodes or LEDs, however, other light emitting elements may also be substituted. The first diode **838** may provide an indication when the outlet cover system **800A/800B** is connected and/or coupled to a power source or an AC voltage. The second diode **840** may provide an indication of when the battery is being utilized in the event of a power failure.

The transistor **834** can be coupled to a sensor **842,** a switch **854,** and/or a light source **852** at a node **866.** The sensor **842** can be a light sensor, a photo resistor, a photodiode, a phototransistor, or other forms of light detecting sensors. The sensor **842** may provide for the detection of light, and/or allow current to pass through as light may be sensed by the sensor. The sensor **842** may be coupled to a comparator **844,** and/or a RC block **846.** The RC block **846** may be utilized to smooth, or limit the amount of current and/or voltage on an input node of the comparator **844.** The comparator **844** may have at least two inputs, and at least one output. The first input may be coupled to the sensor **842;** the second input may be left floating or have a null value coupled to it, and the output may be coupled to a transistor **828,** a transistor **850,** and/or a resistance **848.** The output of the comparator may trigger when the sensor **842** indicates that it no longer senses sufficient light within the local environment, while alternatively the comparator may also trigger when the sensor **842** indicates that it sense sufficient light within the local environment. The output of the comparator **844** may cause the transistor **850** to couple the light source **852** to ground, and thus allowing current to pass through the light source **852.**

The light source **852** may be comprised of at least one light bulb, wherein the at least one light bulb may be a Light Emitting Diode or LED, or an Organic LED or OLED. In one embodiment of the present disclosure, the light source **852** may be comprised of light bulb **853A,** light bulb **853B,** and/or light bulb **853C.** The light source **852** may be coupled to the transistor **850,** a switch **854,** the sensor **842,** and/or the transistor **834.** The switch **854** may allow the regulated voltage to be coupled directly or indirectly to the light source **852.** The switch **854** may be a physical switch that a user may move to indicate whether the switch connects or disconnects the regulated voltage from the light source. When the switch is in a disconnected position, the outlet cover system **800A/800B** may be in an emergency lighting operational mode, wherein the outlet cover system **800A/800B** can utilize an emergency light circuit that may comprise, but is not limited to, the battery **830,** the transistor **832/834,** and the light source **852.** When the switch **854** is in the connected state, the outlet cover system **800A/800B** may operate in a nightlight operational mode wherein the outlet cover system **800A/800B** can nightlight circuit that may include, but is not limited to, the sensor **842,** the comparator **844,** and the light source **852.**

The switch may be coupled to a diode block **856** that may be utilized to prevent voltage and/or current from being seen on the regulated voltage output of the voltage regulator (not shown). The battery charger **822** may have an input connected or coupled to a resistance **826,** and/or a transistor **828.** In one embodiment of the present disclosure, the transistor **828** can be coupled to the output of the comparator **844.** Node A may also be referenced as node A **858.**

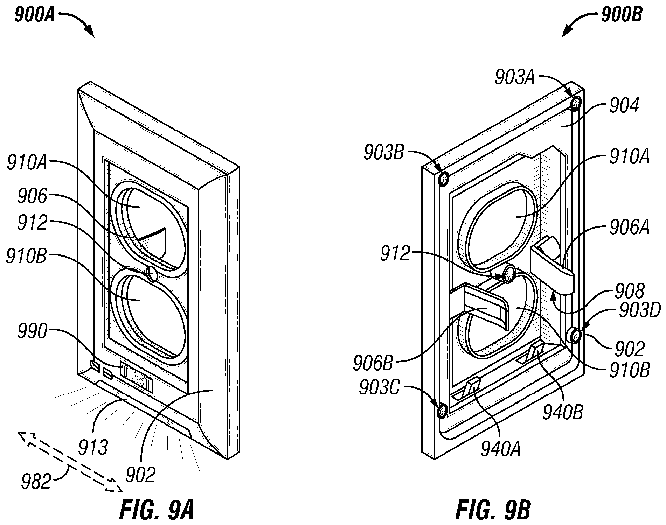

**FIG. 9A** is an illustration of an outlet cover 900A with a directional indicator 982, which is not covered by the appended claims, but is considered as useful for understanding the invention. The outlet cover **900A** can have a faceplate **902.** The faceplate **902** can define outlet openings **910A** and/or **910B** (collectively **910**). In some embodiments, the outlet openings **910** may also include switch openings, dimmer openings, usb outlet openings, audio connector openings, video connector openings, and/or other openings defined by the faceplate **902** that would allow for a cable and/or connector to pass through the faceplate. The outlet cover **900A** may also have an arm **906.** In at least one embodiment, the arm **906** incudes a conductor housed within it that allows for the coupling of the outlet cover **900A** with an electrical system (not illustrated). The electrical system may be a house, and/or building electrical system that may include AC and/or DC voltage or currents. The outlet cover **900A** may be coupled to an electrical outlet (not illustrated) through a fastener (not illustrated) and a fastener opening **912.**

In at least one embodiment, the outlet cover **900A** has a light source **913.** The light source **913** may include at least one Light Emitting Diode (LED). In some embodiments, the light source **913** may also have a directional indicator **982.** The directional indicator **982** may include arrows indicating a direction to the right or left of an axis traversing the outlet openings **910,** and/or to the right or left of the outlet cover **900A.** The directional indicator **982** may be dual directional and/or indicating that both directions can be utilized for an exit, or the directional indicator **982** may include a single direction as selected by a user before the outlet cover **900A** is installed. In at least one example, the outlet cover **900A** may have a test button **990.** The test button **990** can also include a test circuit (not illustrated) to allow for testing a power source coupled to the outlet cover **900A,** such as a AC power source or a battery. The test button **990** may be coupled to a power source, and/or a battery.

**FIG. 9B** is an illustration of a rear perspective view of an outlet cover **900B.** The outlet cover **900B** includes a backplate **904.** While the backplate **904** may be molded, glued and/or secured to the faceplate (not illustrated), it may also be secured with fastener(s) **903A, 903B, 903C,** and/or **903D** (collectively **903**). In some embodiments, one fastener may be utilized, while in other embodiemnts more than one fastener **903** may be utilized. The backplate **904** may define an outlet opening **910A,** and an outlet opening **910B** (collectively **910**). The outlet opening(s) **910** may also be switch openings, cable connector openings, audio/video connector openings, and/or other openings for various connectors and/or objects. The outlet cover **900B** may also be fastened to an outlet device (not illustrated) with a fastener (not illustrated) through a fastern opening **912** that is defined by the outlet cover **900B.** The outlet cover **900B** can have arm(s) **906A,** and/or **906B** (collectively **906**) that extend rearward from the backplate **904.**

The outlet cover **900B** can also have a first switch **940A** and a second switch **940B.** In at least one embodiment, the first switch **940A** can be utilized to know which operational mode the outlet cover **900B** is operating in. For example, the outlet cover **900B** may operate in a nightlight mode that turns the light on when the light level in the room and/or location of the outlet cover **900B** drops below a threshold, and a emergency lighting mode that turns on when there is no power detected at the outlet device, and the light level drops below a threshold. The second switch **940B** can indicate which direction a directional indicator (not illustrated) may indicate. For example, the switch **940B** may be in a right or first position that indicates that a right arrow will be indicated, a second or neutral position for indicating that both directions will be indicated and a third position or left position to indicate that a left arrow will be indicated. It would be understood that these directions are for illustrative purposes and a right position may indicate a left arrow, and a left position may indicate a right arrow.

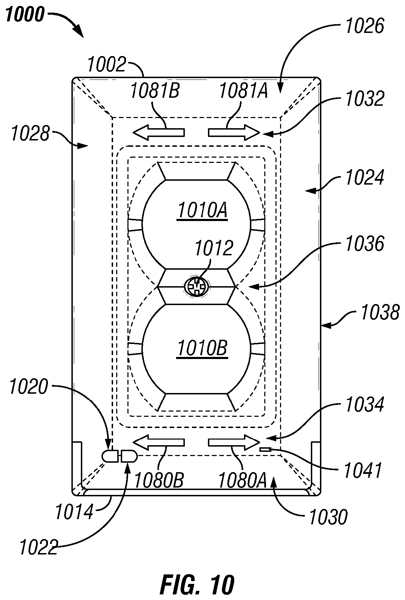

**FIG 10** is an illustration of a front view of an outlet cover 1000, which is not covered by the appended claims, but is considered as useful for understanding the invention. The outlet cover **1000** can include a faceplate **1002.** The faceplate **1002** can have angled sections **1024, 1026, 1028,** and/or **1030.** The angled sections **1024, 1026, 1028,** and/or **1030** can provide support, and a housing for the light source **1014,** indicator **1020,** sensor **1022,** and/or other additional circuitry. The outlet cover **1000** can also have flat sections **1032,** and/or **1034** that can provide support, and a housing for directional indicators **1081A** and/or **1081B** (collectively **1081**) and/or directional indicators **1082A** and/or **1082B** (collectively **1082**).

The angled sections and the flat sections can also define the outlet openings **1010A** and/or **1010B.** In at least one example, the outlet cover **1000** can be secured with a fastener (not illusted) throught fastener opening **1012.** The outlet cover **1000** may also have a indicator **1020** that allows a user to know when the outlet cover **1000** is connected to an electrical power source. For example, the indicator may turn green when the outlet cover **1000** is connected to power, but may turn red or off when the outlet cover **1000** is not connected to power or there is a power outage. The outlet cover **1000** may also have a sensor **1022** for detecting the ambient light. For example, if the light in a room exceeds a threshold level as recorded and/or sensed by the sensor **1022** then the light source **1014** may be turned off. Alternatively, if the light in a room or location drops below a threshold level as recorded and/or sensed by the sensor **1022** then the light source **1014** may be turned on. In at least one embodiment, when the light source **1014** is turned on one or more of the directional indicator(s) **1080,** and/or **1081** may also be activated. In another example, the sensor **1022** may also include an environmental quality sensor such as a smoke or air quality sensor that when triggered (the air quality is below a threshold value, or when a smoke senser detects smoke above a threadshold value) then both directional indicator **1080** and **1081** will turn on. It should be noted that a user (not illustrated) may select a single direction, right directional indicator **1080A** and/or **1081A,** a left directional indicator **1080B** and/or **1081B,** or both directions directional indicators **1080A, 1080B, 1081A,** and **1081B.** The outlet cover **1000** may also have a sound emitter **1041,** capable of producing an audible alarm or sound to indicate when there is a power outage, or if there is an environmental condition that a user (not illustrated) should be notified about. For example, when a fire and/or smoke is detected.

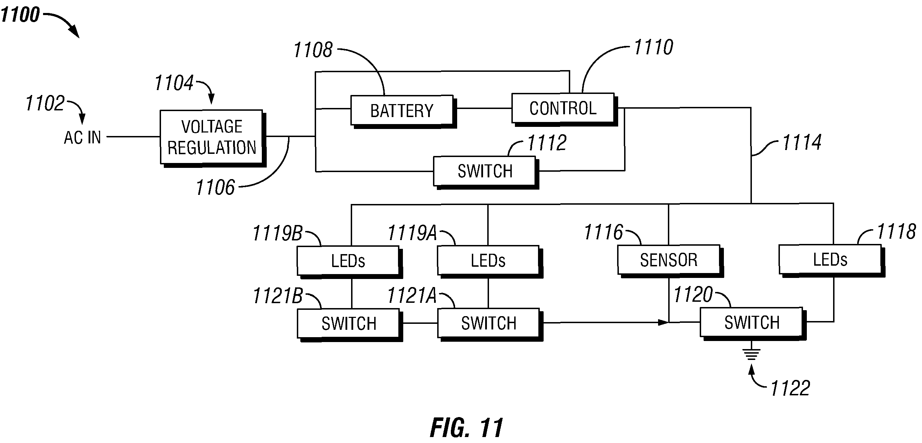

**FIG. 11** is an illustration of a block diagram view of an outlet cover system 1100 according to the invention. The outlet cover system **1100** may have an incoming voltage source **1102** that can in one embodiment be an Alternating Current or AC voltage source. In another embodiment, the incoming voltage source **1102** may be received by an at least one conductor (not shown). The incoming voltage source **1102,** may be regulated and/or converted to a DC operating voltage by a voltage regulation circuit **1104** to regulate the incoming voltage from the incoming voltage source **1102.** The output of the voltage regulation circuit **1102** can be a regulated voltage **1106,** the regulated voltage can be, but is not limited to, sent to a battery **1108,** a control circuit **1110,** and/or a switch **1112.** The battery **1108,** can in alternative embodiments be coupled and/or connected to a battery charging circuit that may utilize the regulated voltage **1106.** The control circuit **1110** allows the outlet cover system **1110** to provide a light source during a power outage by activating the battery, and/or opening a connection or coupling between a light source and the battery **1108.** The control circuit **1110** may in one embodiment also include the switch **1112.**

The switch **1112** allows the battery and/or control circuit **1110** to be bypassed and the regulated voltage to be passed to the input voltage node **1114.** The switch **1112** may allow for the controlling a connection between the light source **1118,** the battery **1108,** and the regulated voltage **1106.** The input voltage node **1114** may provide a voltage to a sensor **1116,** and/or a light source **1118.** The sensor **1116,** can be connected to a switch **1120** that may be connected to the light source **1118,** with all of these being coupled to a ground 1122. The sensor 1116, includes a light sensor, a photo resistor, a photodiode, and/or a phototransistor. The sensors 1116 may activate the switch 1120 allowing the light source 1118 to be activated. The sensor is coupled to the control circuit before the switch, and the sensor is utilized with both of the at least two operational modes. Directional indicator(s) 1119A and/or 1119B (collectively 1119) are coupled to the switch 1120. In at least one embodiment, the directional indicator(s) 1119A and/or 1119B are light sources, and/or Light Emitting Diodes (LEDs). However, other light sources may also be utilized. The directional indicator 1119A may in at least one example, be a right directional indicator, and indicator 1119B, can in at least one example, be a left directional indicator. The directional indicators 1119 may be controlled and/or activated by a switch 1121 A and/or 1121B (collectively 1121). In at least one embodiment, the directional indicators 1119 may be controlled by a single switch 1121. The single switch may allow for the directional indicator(s) 1119 to be selected as a right only, left only, or both directional indicators.

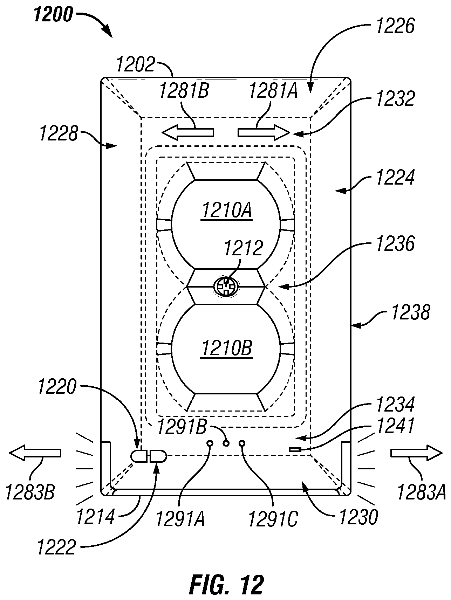

FIG. 12 is a front view illustration of an outlet cover 1200 according to the invention. The outlet cover 1200 can include a faceplate 1202. The faceplate 1202 can have angled sections 1224, 1226, 1228, and/or 1230. The angled sections 1224, 1226, 1228, and/or 1230 provide support, and a housing for the light source 1214, indicator 1220, sensor 1222, and/or other additional circuitry. The outlet cover 1200 can also have flat sections 1232, and/or 1234 that provide support, and a housing for directional indicators 1281A and/or 1281B (collectively 1281) and/or directional indicators 1282A and/or 1282B (collectively 1282). The light source 1214 may include Light Emitting Diode(s) (LED) or other light sources capabled of receiving power and/or electrical energy and converting it into a visible wavelength of light. The light source 1214 may extend along the bottom of the outlet cover 1200, and extend along both sides of the outlet cover. The portion of the light source 1214 that extends along the side may emit on a wall (not illustrated) a side directional indicator 1283A and/or 1283B. Each of the side directional indicator 1283A and/or 1283B may be used individually or together, and be activated by a switch or directional control switch (not illustrated). In at least one example, the outlet cover 1200 may also have test apperaturs 1291A, 1291B, and/or 1291C (collectively 1291) defined by one or more of said flat sections or angled sections. The test apperatures 1291 can allow for a testing device (not illustrated) to be utilized for verifying the strength of a power source coupled to the outlet cover 1200.

The angled sections and the flat sections can also define the outlet openings 1210A and/or 1210B. In at least one example, the outlet cover 1200 can be secured with a fastener (not illustrated) through fastener opening 1212. The outlet cover 1200 may also have a indicator 1220 that allows a user to know when the outlet cover 1200 is connected to an electrical power source. For example, the indicator may turn green when the outlet cover 1200 is connected to power, but may turn red or off when the outlet cover 1200 is not connected to power or there is a power outage. The outlet cover 1200 may also have a sensor 1222 for detecting the ambient light. For example, if the light in a room exceeds a threshold level as recorded and/or sensed by the sensor 1222 then the light source 1214 may be turned off. Alternatively, if the light in a room or location drops below a threshold level as recorded and/or sensed by the sensor 1222 then the light source 1214 may be turned on.

In at least one embodiment, when the light source 1214 is turned on one or more of the directional indicator(s) 1280, and/or 1281 may also be activated. In another example, the sensor 1222 may also include an environmental quality sensor such as a smoke or air quality sensor that when triggered (the air quality is below a threshold value, or when a smoke senser detects smoke above a threadshold value) then both directional indicator **1280** and **1281** will turn on. It should be noted that a user (not illustrated) may select a single direction, right directional indicator **1280A** and/or **1281A,** a left directional indicator **1280B** and/or **1281B,** or both directions directional indicators **1280A, 1280B, 1281A,** and **1281B.** The outlet cover **1200** may also have a sound emitter **1241,** capable of producing an audible alarm or sound to indicate when there is a power outage, or if there is an environmental condition that a user (not illustrated) should be notified about. For example, when a fire and/or smoke is detected. In at least one example, the directional indicator(s) **1281** and/or **1283,** light source **1214,** indicator **1220** may be of various colors in the visible light spectrum. For example, the light source **1214** may provide a light output that is the color white, while the directional indicator(s) **1281** and/or **1283** may be red or white.

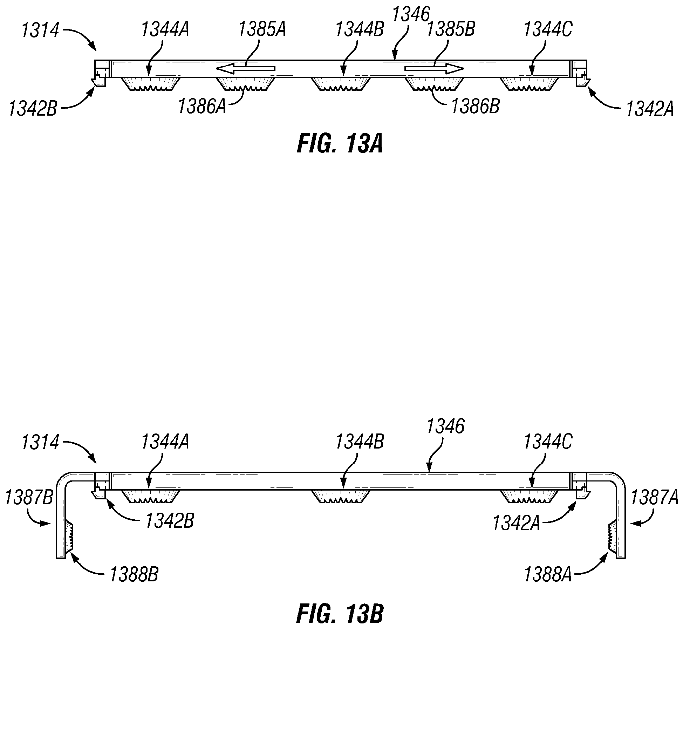

**FIG. 13A** is an illustration of a light source **1314** for an outlet cover. The light source **1314** can have light bulb(s) **1344A, 1344B,** and/or **1344C** that allow for light to be passed through a lens **1346.** In at least one example, the light bulb(s) **1344A, 1344B,** and/or **1344C** are Light Emitting Diode(s) (LEDs). The light source **1314** may also have indicator light bulb(s) **1386A** and/or **1386B.** The indicator light bulb(s) may pass through an arrow lens **1385A,** and/or **1385B.** The one or both of the indicator light bulb(s) **1386** and arrow lense(s) **1382** may be utilized to signal a user in a specific direction in the event of a power outage or other event. The light source **1314** may also have clip(s) **1342A** and/or **1342B** that allow for the light source to be secured to and/or within a outlet cover (not illustrated).

FIG. 13B is an illustration of an extended light source 1314 for an outlet cover. The light source 1314 can have light bulb(s) 1344A 1344B, and/or 1344C that allow for light to be passed through a lens 1346. In at least one example, the light bulb(s) 1344A, 1344B, and/or 1344C are Light Emitting Diode(s) (LEDs). The light source 1314 may also have indicator light bulb(s) 1388A and/or 1388B. The light source 1314 may have extensions 1387A and/or 1387B that allow the light source 1314 to extend along the sides of an outlet cover (not illustrated). The extensions 1387A and/or 1387B may also include the indicator light bulb(s) 1388A and/or 1388B (collectively 1388). In at least one example, the indicator light bulb(s) 1388 may be Light Emitting Diode(s) (LEDs) or other light emitting devices. The light source 1314 may also have clip(s) 1342A and/or 1342B that allow for the light source to be secured to and/or within a outlet cover (not illustrated).

While various embodiments in accordance with the principles disclosed herein have been described above, it should be understood that they have been presented by way of example only, and not limitation. Thus, the breadth and scope of this disclosure should not be limited by any of the above-described exemplary embodiments, but should be defined only in accordance with the appended claims. Furthermore, the above advantages and features are provided in described embodiments, but shall not limit the application of such issued claims to processes and structures accomplishing any or all of the above advantages.

## Claims

1. An outlet cover (400, 900, 1200) for engagement with an electrical outlet comprising:
a faceplate (402, 902, 1202) and a backplate (404, 904);
at least one arm (406, 906) having an electrical conductor (408) extending from the backplate;
a sensor (1116, 1222) for detecting ambient light and housed between the faceplate and the backplate;
a light source (414, 1118, 1214) attached to the outlet cover and at least one directional indicator (1119, 1280, 1281) visible from the faceplate;
a control circuit (416, 1110) housed between the faceplate and the backplate, having at least two operational modes and coupled to the light source and the at least one direction indicator; and
a switch (440, 1120) coupled to the control circuit for shifting between the at least two operational modes, wherein the at least two operational modes are an emergency lighting mode which activates the at least one directional indicator (1119, 1280, 1281) and a combination nightlight and emergency lighting mode wherein the switch causes the nightlight mode portion of the control circuit including the light source (414, 1118, 1214) to be activated or deactivated;
wherein the sensor (1116, 1222) is coupled to the control circuit (416, 1110) before the switch, and the sensor (1116, 1222) is utilized with both of the at least two operational modes.

2. The outlet cover of claim 1, wherein the faceplate and the backplate each define at least one outlet opening (410A).

3. The outlet cover of claim 1, wherein the electrical conductor is coupled to the control circuit.

4. The outlet cover of claim 1, wherein the sensor is a photodiode.

5. The outlet cover of claim 1, wherein the light source is connected to a lens (546).

6. The outlet cover of claim 1, further comprises a sound emitter (341).

7. The outlet cover of claim 1, further comprises a battery (418) coupled to the control circuit.

8. The outlet cover of claim 1, further comprises a second switch (940B) for selecting a direction for the at least one directional indicator.

9. The outlet cover of claim 8, wherein the second switch may select from right, left or both for the at least one directional indicator.

## Patentansprüche

1. Steckdosenabdeckung (400, 900, 1200) zum Eingriff an einer Steckdose, umfassend:
eine Frontplatte (402, 902, 1202) und eine Rückplatte (404, 904);
mindestens einen Arm (406, 906) mit einem elektrischen Leiter (408), der sich von der Rückplatte erstreckt;
einen Sensor (1116, 1222) zum Erfassen von Umgebungslicht, der zwischen der Frontplatte und der Rückplatte aufgenommen ist;
eine Lichtquelle (414, 1118, 1214), die an der Steckdosenabdeckung befestigt ist, und mindestens eine Richtungsanzeige (1119, 1280, 1281), die von der Frontplatte aus sichtbar ist
einen Steuerkreis (416, 1110), der zwischen der Frontplatte und der Rückplatte aufgenommen ist, der mindestens zwei Betriebsmodi aufweist und mit der Lichtquelle und der mindestens einen Richtungsanzeige gekoppelt ist; und
einen Schalter (440, 1120), der mit dem Steuerkreis zum Wechseln zwischen den mindestens zwei Betriebsmodi gekoppelt ist, wobei die mindestens zwei Betriebsmodi ein Notbeleuchtungsmodus, der die mindestens eine Richtungsanzeige (1119, 1280, 1281) aktiviert, und ein Nachtlicht- und Notbeleuchtungskombinationsmodus sind, in dem der Schalter bewirkt, dass der Nachtlichtmodusabschnitt des Steuerkreises, der die Lichtquelle (414, 1118, 1214) beinhaltet, aktiviert oder deaktiviert wird;
wobei der Sensor (1116, 1222) vor dem Schalter mit dem Steuerkreis (416, 1110) gekoppelt ist, und der Sensor (1116, 1222) mit beiden der mindestens zwei Betriebsmodi verwendet wird.

2. Steckdosenabdeckung nach Anspruch 1, wobei die Frontplatte und die Rückplatte jeweils mindestens eine Steckdosenöffnung (410A) definieren.

3. Steckdosenabdeckung nach Anspruch 1, wobei der elektrische Leiter mit dem Steuerkreis gekoppelt ist.

4. Steckdosenabdeckung nach Anspruch 1, wobei der Sensor eine Photodiode ist.

5. Steckdosenabdeckung nach Anspruch 1, wobei die Lichtquelle mit einer Linse (546) verbunden ist.

6. Steckdosenabdeckung nach Anspruch 1, die ferner einen Schallemitter (341) umfasst.

7. Steckdosenabdeckung nach Anspruch 1, die ferner eine Batterie (418) umfasst, die mit dem Steuerkreis gekoppelt ist.

8. Steckdosenabdeckung nach Anspruch 1, die ferner einen zweiten Schalter (940B) zum Wählen einer Richtung für die mindestens eine Richtungsanzeige umfasst.

9. Steckdosenabdeckung nach Anspruch 8, wobei der zweite Schalter in Bezug auf die mindestens eine Richtungsanzeige aus links, rechts oder beidem auswählen kann.

## Revendications

1. Couvercle de sortie (400, 900, 1200) destiné à être engagé avec une sortie électrique comprenant :
une plaque avant (402, 902, 1202) et une plaque arrière (404, 904) ;
au moins un bras (406, 906) ayant un conducteur électrique (408) s'étendant depuis la plaque arrière ;
un capteur (1116, 1222) pour détecter la lumière ambiante et logé entre la plaque avant et la plaque arrière ;
une source de lumière (414, 1118, 1214) fixée au couvercle de sortie et au moins un indicateur directionnel (1119, 1280, 1281) visible depuis la plaque avant ;
un circuit de commande (416, 1110) logé entre la plaque avant et la plaque arrière, ayant au moins deux modes de fonctionnement et couplé à la source de lumière et à l'au moins un indicateur de direction ; et
un commutateur (440, 1120) couplé au circuit de commande pour basculer entre les au moins deux modes de fonctionnement, dans lequel les au moins deux modes de fonctionnement sont un mode d'éclairage d'urgence qui active l'au moins un indicateur directionnel (1119, 1280, 1281) et un mode combiné veilleuse et éclairage d'urgence dans lequel le commutateur active ou désactive la partie mode veilleuse du circuit de commande comprenant la source de lumière (414, 1118, 1214) :
dans lequel le capteur (1116, 1222) est couplé au circuit de commande (416, 1110) avant le commutateur, et le capteur (1116, 1222) est utilisé avec les deux des au moins deux modes de fonctionnement.

2. Couvercle de sortie selon la revendication 1, dans lequel la plaque avant et la plaque arrière définissent chacune au moins une ouverture de sortie (410A).

3. Couvercle de sortie selon la revendication 1, dans lequel le conducteur électrique est couplé au circuit de commande.

4. Couvercle de sortie selon la revendication 1, dans lequel le capteur est une photodiode.

5. Couvercle de sortie selon la revendication 1, dans lequel la source de lumière est connectée à une lentille (546).

6. Couvercle de sortie selon la revendication 1, comprenant en outre un émetteur de son (341).

7. Couvercle de sortie selon la revendication 1, comprenant en outre une batterie (418) couplée au circuit de commande.

8. Couvercle de sortie selon la revendication 1, comprenant en outre un deuxième commutateur (940B) pour sélectionner une direction pour l'au moins un indicateur directionnel.

9. Couvercle de sortie selon la revendication 8, dans lequel le deuxième commutateur peut sélectionner parmi la droite, la gauche ou les deux pour l'au moins un indicateur directionnel.
